# EUROPÄISCHE PATENTSCHRIFT

(11) **EP 0 850 691 B1**
(45) Veröffentlichungstag und Bekanntmachung des Hinweises auf die Patenterteilung: **02.01.2003**
(21) Anmeldenummer: 97118561.6
(22) Anmeldetag: 24.10.1997
(51) Int. Cl.: B03B 4/02, B03B 9/06

(54) **Verfahren und Vorrichtung zur Behandlung von Abfall oder Restabfall**
Method and device for waste treatment
Procédé et dispositif pour le traitement de déchets

(30) Priorität: 23.12.1996 DE 19654255
(43) Veröffentlichungstag der Anmeldung: 01.07.1998
(73) Patentinhaber: HERHOF UMWELTTECHNIK GmbH, D-35606 Solms-Niederbiel (DE)
(72) Erfinder: Hagen, Bianca-Maria, 35606 Solms-Oberndorf (DE)
(74) Vertreter: Zinnecker, Armin, Dipl.-Ing.

(56) Entgegenhaltungen:
- EP-A- 0 280 127
- EP-A- 0 644 166
- DE-A- 4 434 611
- DE-U- 9 318 936
- GB-A- 1 002 550
- US-A- 5 387 267

## Beschreibung

Die Erfindung betrifft ein Verfahren zur Behandlung von Abfall oder Restabfall und eine Vorrichtung zur Durchführung eines derartigen Verfahrens.

Betrachtet man die Dichteverteilung üblicher Gemische von Abfall oder Restabfall, so wird deutlich, daß die Fraktionen Steine/Keramik mit einer Dichte von 2 bis 3 g/cm³, Glas mit einer Dichte von etwa 2,6 g/cm³ und Metall mit einer Dichte von etwa 2 bis 3 g/cm³ eine deutliche höhere Dichte aufweisen als andere Fraktionen wie zum Beispiel Kunststoff mit einer Dichte von etwa 0,9 bis 1,4 g/cm³. Unter Restabfall wird dabei ein Gemisch verstanden, das aus der biologischen oder mechanischen oder mechanisch-biologischen Behandlung von Abfall bzw. eines Abfallgemisches entstanden ist. Die biologische bzw. mechanisch-biologische Behandlung kann dabei in einem geschlossenen Behälter mit Zwangsbelüftung stattfinden.

Aus der EP 0 644 166 A ist ein Verfahren zur Kompostierung eines Gemisches von organischen Stoffen und Störstoffen, insbesondere von organischen Abfällen, bekannt, bei dem die organischen Stoffe in einem geschlossenen Behälter unter Zwangsbelüftung biologisch abgebaut werden und bei dem der dabei entstandene Rohkompost einem Sinkabscheider zugeführt wird, in dem die Störstoffe absinken. Die in dem Sinkabscheider nicht absinkenden Stoffe werden emeut in einem geschlossenen Behälter unter Zwangsbelüftung biologisch abgebaut Der Rohkompost kann zerkleinert werden, bevor er dem Sinkabscheider zugeführt wird.

Die US 5 387 267 A offenbart ein Verfahren zur Erzeugung von Treibstoff aus Abfällen, bei dem die Abfälle zunächst in einen organischen Anteil und einen anorganischen Anteil getrennt werden. Aus dem organischen Anteil wird Treibstoff hergestellt. Der anorganische Anteil kann zerkleinert werden.

Die DE 44 34 611 A offenbart ein Verfahren zur biologisch-mechanischen Behandlung von Abfall, bei dem der Abfall gesichtet, zerkleinert und homogenisiert wird. Anschließend wird er in einer Rotte einem biologischen Abbauprozeß unterzogen. Das Rotteprodukt wird nach der Rottung in eine organische und eine anorganische Fraktion separiert.

Aus der DE 93 18 936 U ist eine Vorrichtung zum Auftrennen und Sortieren von Müllgemischen bekannt, die das auf ein Förderband aufgebrachte Müllgemisch durch ein Sauggebläse und eine walzenförmige, rotierende Trommel in einzelne Fraktionen sortiert.

Die GB 1 002 550 A offenbart ein Verfahren zur Behandlung von Abfällen, bei dem das organische Material in den Abfällen fermentiert wird und das Fermentationsprodukt von. Mineralstoffen getrennt wird.

Aus der EP 0 280 127 A ist eine Vorrichtung zum Trennen von heterogenen Gemischen, insbesondere Kompost, bekannt.

Aufgabe der Erfindung ist es, ein verbessertes Verfahren zur Behandlung von Abfall oder Restabfall vorzuschlagen.

Erfindungsgemäß wird diese Aufgabe bei einem Verfahren der eingangs angegebenen Art durch die Merkmale des Anspruchs 1 gelöst. Bei einer Vorrichtung der eingangs angegebenen Art erfolgt die Lösung durch die Merkmale des Anspruchs 8. Der Abfall bzw. Restabfall wird in einem geschlossenen Behälter unter Zwangsbelüftung biologisch oder mechanisch-biologisch behandelt, nämlich stabilisiert. Der derart behandelte Abfall bzw. Restabfall wird in eine Fraktion mit spezifisch leichtem Material und in eine Fraktion mit spezifisch schwerem Material sortiert. Es findet also eine Dichtesortierung statt. Da gerade die Fraktionen Steine/Keramik, Glas und Metall den überwiegenden Anteil an Stör- und Intertstoffen darstellen und da diese Fraktionen in einem verhältnismäßig engem Dichtebereich (von etwa 2 bis 3 g/cm³) liegen, wird erfindungsgemäß vorgeschlagen, die Stör- und Inertstoffabscheidung durch eine Dichtesortierung zu bewirken.

Die Fraktion mit spezifisch schwerem Material wird selektiv zerkleinert wobei die spröden Bestandteile dieser Fraktion zerkleinert werden und wobei Fehleinträge wie Holz oder Kunststoff nicht zerkleinert werden. Ferner wird die selektiv zerkleinerte Fraktion in zwei Fraktionen getrennt, vorzugsweise gesiebt. Es findet also eine selektive Zerkleinerung statt. Die selektive Zerkleinerung kann mittels einer Prall- und/oder Schlag- und/oder Walzenzerkleinerungsvorrichtung und/oder einem Prallbrecher und/oder einem Walzenbrecher durchgeführt werden. Die Fraktion mit spezifisch schwerem Material besteht im wesentlichen aus Steinen, Keramik und Glas. Wenn Metall nicht zuvor abgetrennt wurde, ist dieses ebenfalls enthalten. Zusätzlich finden sich im spezifisch schwerem Material, das auch als Schwergut bezeichnet werden kann, geringe Anteile an Holz und Hartkunststoff. Die geringen Anteile an Holz und Hartkunststoff führen dazu, daß das Schwergut die Anforderungen der Technischen Anleitung zur Verwertung, Behandlung und sonstigen Entsorgung von Siedlungsabfällen (TASi) bezüglich des Glühverlustes nicht erfüllen kann. Dieses Problem wird durch die selektive Zerkleinerung des Schwergutes gelöst. Die klassische Aufbereitung unterscheidet Zerkleinerung durch Druck, Schlag/Prall und Scherung. Jede Beanspruchungsform ist für die Zerkleinerung eines anderen Materials prädestiniert. Für die hier angewandte Zerkleinerung mit einem Prallbrecher oder einem Walzenbrecher, also durch Schlag/Prall bzw. Druck, ist charakteristisch, daß Materialien, die Sprödbruch aufweisen, gut zerkleinert werden. Materialien, die eine faserige Struktur aufweisen, duktil oder elastisch sind, werden schlecht oder gar nicht zerkleinert. Dieser Effekt wird bei der selektiven Zerkleinerung ausgenutzt. Die spröden Bestandteile des Schwergutes, also Steine, Glas und Keramik, werden auf die gewünschte Korngröße zerkleinert. Fehleinträge wie Holz (faserig) oder Kunststoff (elastisch) werden nicht zerkleinert. Nach der Zerkleinerung lassen sich dann Steine, Glas und Keramik von den organischen Fehleinträgen durch eine Siebklassierung trennen.

Die Überkornfraktion (also der Siebüberlauf) enthält die elastischen Teile (Holz und Kunststoff). Sie kann einer Verbrennung zugeführt werden. Die Siebdurchgangsfraktion enthält die Mineralteile.

Vorteilhafte Weiterbildungen sind in den Unteransprüchen beschrieben.

Vorzugsweise wird der Siebdurchgang gewaschen. Dabei wird die noch infolge Anhaftung vorhandene organische Oberflächenbelastung am zerkleinerten Schwergut in einer Wäsche abgespült. An den Mineralteilen der Siebdurchgangsfraktion können noch organische Stoffe sorptiv anhaften, die über eine Waschanlage abgespült werden.

Vorzugsweise wird das abgewaschene Material getrocknet. Es kann nach der Trocknung der Brennfraktion zugeführt werden.

Vorzugsweise erfolgt die Sortierung bzw. Dichtesortierung durch einen Luftherd. Der Luftherd besteht aus einer geneigten Herdplatte mit integrierten Luftdüsen. Die Herdplatte wird in elliptisch schwingende Bewegungen versetzt, während von unten Luft durch die Luftdüsen strömt. Die Aufgabe des zu sortierenden Materials erfolgt in der Mitte der Herdplatte. Das spezifisch leichte Material wird durch die durchströmende Luft leicht angehoben und fließt entsprechend der Neigung der Herdplatte nach unten ab. Das spezifisch schwere Material kann von dem Luftstrom nicht angehoben werden. Es wird von der schwingenden Bewegung der Herdplatte erfaßt und so zur oberen Kante transportiert und dort abgeworfen. Die Herdplatte wird also derart in schwingende Bewegungen versetzt, daß das spezifisch schwere Material in Richtung nach oben transportiert wird.

Eine weitere vorteilhafte Weiterbildung ist dadurch gekennzeichnet, daß der Abfall bzw. Restabfall vor der Sortierung bzw. Dichtesortierung vorklassiert wird. Vorzugsweise erfolgt diese Vorklassierung durch eine Siebung. Der Abfall bzw. Restabfall wird in zwei oder mehr Fraktionen getrennt. Eine Fraktion, vorzugsweise der Siebdurchgang, wird der Sortierung bzw. Dichtesortierung bzw. dem Luftherd zugeführt.

Vorteilhaft ist es, aus einer Fraktion der Vorklassierung bzw. Siebung, vorzugsweise dem Siebüberlauf, nach unten rollende Mineralteile abzuscheiden. Dies erfolgt vorzugsweise durch einen Schrägbandabscheider.

Eine Vorrichtung zur Behandlung von Abfall oder Restabfall ist erfindungsgemäß wie in Anspruch 8 beschrieben ausgestaltet. Die Vorrichtung umfaßt einen geschlossenen Behälter, der eine Einrichtung zur Zwangsbelüftung aufweist, zum biologischen oder mechanisch-biologischen Behandeln, nämlich Stabilisieren des Abfalls bzw. Restabfalls, einen Luftherd zum Sortieren des stabilisierten Abfalls bzw. Restabfalls in eine Fraktion mit spezifisch leichtem Material und in eine Fraktion mit spezifisch schwerem Material, und eine Einrichtung zum selektiven Zerkleinern der Fraktion mit spezifisch schwerem Material derart, daß die spröden Bestandteile dieser Fraktion zerkleinert werden und Fehleinträge wie Holz oder Kunststoff nicht zerkleinert werden, sowie mit einer Trennungseinrichtung, vorzugsweise einem Sieb, zum Trennen der selektiv zerkleinerten Fraktion in zwei Fraktionen.

Vorteilhafte Weiterbildungen der Vorrichtung sind in den weiteren Unteransprüchen beschrieben.

Eine vorteilhafte Weiterbildung ist gekennzeichnet durch eine Prall- und/oder Schlag- und/oder Walzenzerkleinerungsvorrichtung und/oder einen Prallbrecher und/oder einen Walzenbrecher zum Zerkleinern, vorzugsweise selektiven Zerkleinern, der Fraktion mit spezifisch schwerem Material.

Eine weitere vorteilhafte Weiterbildung ist gekennzeichnet durch eine Waschanlage zum Waschen des Siebdurchgangs.

Vorzugsweise ist ein Trockner zum Trocknen des abgewaschenen Materials vorhanden.

Vorzugsweise ist ein Sieb vorhanden zum Vorklassieren des Abfalls bzw. Restabfalls.

Eine weitere vorteilhafte Weiterbildung ist gekennzeichnet durch einen Schrägbandabscheider zum Abscheiden von nach unten rollenden Mineralteilen aus dem Siebüberlauf.

Ein Ausführungsbeispiel der Erfindung wird nachstehend anhand der beigefügten Zeichnung im einzelnen erläutert. In der Zeichnung zeigt
- Fig. 1: ein Verfahrensschema und
- Fig. 2: einen Luftherd in einer schematischen Darstellung.

Der Restabfall 1 wird in einem Schredder 2 auf eine Korngröße von weniger als 150 mm zerkleinert. Dieser Restabfall 3 wird dann einem geschlossenen Behälter 4 zugeführt. Der geschlossene Behälter 4 ist durch eine Türe 5 verschließbar. In dem geschlossenen Behälter 4 wird der Restabfall unter Zwangsbelüftung biologisch stabilisiert.

Das derart entstandene Trockenstabilat 6 wird einem Sieb 7 zugeführt Der Siebdurchgang gelangt zu dem Luftherd 8, der Siebüberlauf zum Schrägbahnabscheider 9.

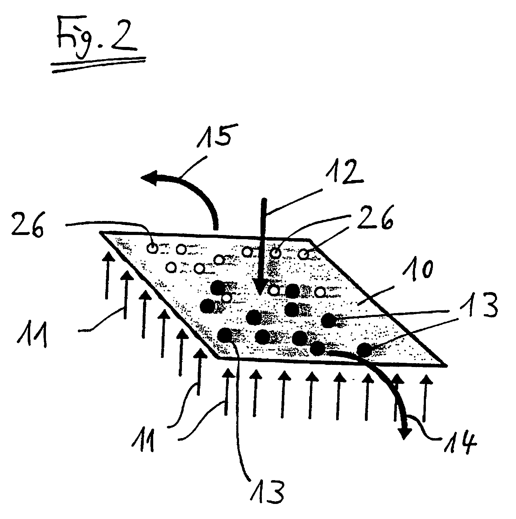

Der Luftherd 8 ist in Fig. 2 schematisch dargestellt. Er besteht aus einer geneigten Herdplatte 10 mit integrierten Luftdüsen, durch die Luft von unten in Richtung der Pfeile 11 hindurchströmt. Die Herdplatte 10 wird währenddessen in elliptisch schwingende Bewegungen versetzt. Die Aufgabe des Materials erfolgt in der Mitte der Herdplatte, wie durch den Pfeil 12 angedeutet. Das spezifisch leichte Material (Leichtgut) 13 wird durch die durchströmende Luft 11 leicht angehoben und fließt entsprechend der Neigung der Herdplatte nach unten in Richtung des Pfeiles 14 ab. Das spezifisch schwere Material (Schwergut) 26 kann von dem Luftstrom 11 nicht angehoben werden. Es wird von der schwingenden Bewegung der Herdplatte 10 erfaßt und so zur oberen Kante transportiert und dort in Richtung des Pfeiles 15 abgeworfen.

Die durchströmende Luft wird hinter dem Luftherd, also nach Durchlaufen des Luftherdes, durch einen in der Zeichnung nicht dargestellten Zyklon von mitgerissenen Materialteilchen befreit.

Durch die Vorklassierung, die vor dem Luftherd 8 durch das Sieb 7 stattfindet, wird erreicht, daß das Komspektrum maximal 3:1 beträgt. Übliche Luftherde können nämlich maximal ein Kornspektrum von 3:1 verarbeiten.

Nach dem Luftherd 8 liegt als Leichtgut ein von der mineralischen Fraktion befreites Material vor, das gegenüber dem Ausgangsmaterial erheblich verbesserte Verbrennungseigenschaften aufweist. Das Leichtgut wird als brennbare Fraktion 16 der Verbrennung 17 zugeführt.

Als Schwergut liegt ein Material vor, das im wesentlichen aus Steinen, Keramik und Glas, gegebenenfalls auch noch aus Metall besteht und in dem zusätzlich geringe Anteile an Holz und Hartkunststoff vorhanden sind. Dieses (verschmutzte) Schwergut 18 wird einer selektiven Zerkleinerung 19 zugeführt.

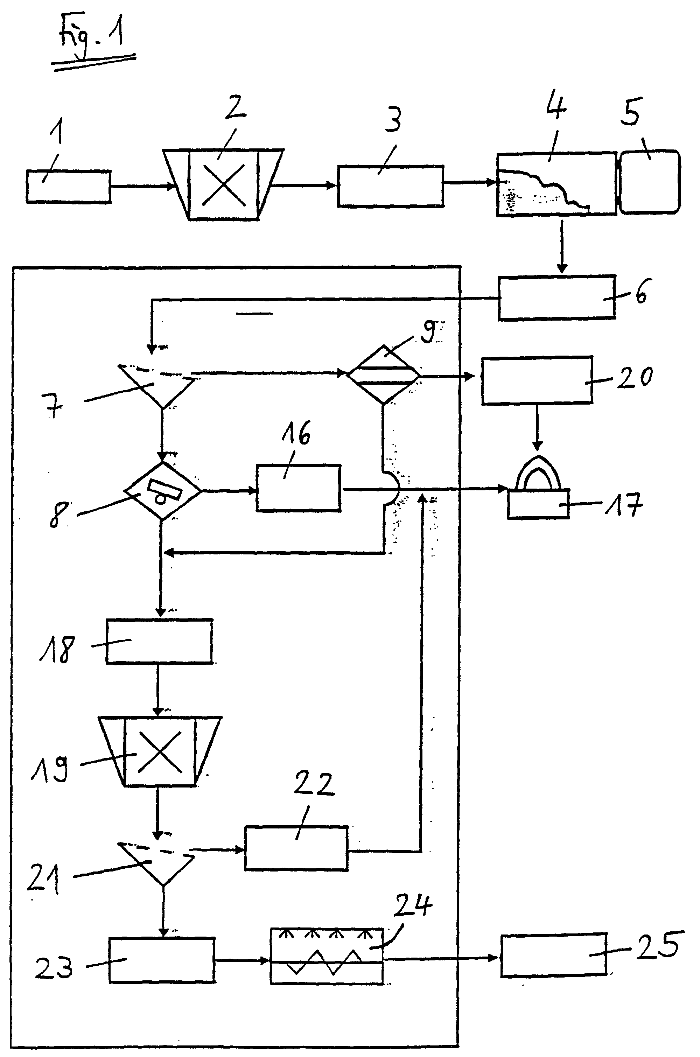

Wie aus der Fig. 1 ersichtlich, wird der Siebüberlauf aus dem Sieb 7 über den Schrägbandabscheider 9 zwecks Abscheidung nach unten rollender Mineralteile der Brennfraktion 20 zugeführt. Die brennbare Fraktion 20 wird dann an die Verbrennung 17 weitergeleitet. Die andere Fraktion des Schrägbandabscheiders 9 wird dem den Luftherd 8 verlassenden Schwergut 18 zugeführt.

Das mittels der selektiv wirkenden Zerkleinerungsvorrichtung 19 zerkleinerte Material wird in einem Sieb 21 in zwei Fraktionen getrennt. Die Überkornfraktion 22 besteht im wesentlichen aus Holz und Kunststoff. Sie wird als brennbare Fraktion der Verbrennung 17 zugeführt. Der Siebdurchgang 23, der alle Mineralteile - (verschmutzte) Steine und Glas - mit noch sorptiv anhaftenden organischen Stoffen enthält, wird einer Waschanlage 24 zugeführt, die aus einem wasserbedüsten Schneckenförderer besteht und in der die sorptiv anhaftenden organischen Stoffe abgespült werden. Die abgespülten organischen Stoffen werden nach Trocknung der Brennfraktion zugeführt. Die verbleibenden Mineralteile 25 bestehen aus (sauberen) Steinen und Glas.

Durch das erfindungsgemäße Verfahren und die erfindungsgemäße Vorrichtung können mineralische Restabfallbestandteile mit einem mineralstofflichen Reinheitsgrad von mehr als 97 % abgetrennt werden. Zunächst wird durch mechanisch-biologische Stabilisierung ein Trockenstabilat aus Restabfall hergestellt. Dieses wird über ein Sieb in mindestens zwei Fraktionen getrennt, wovon eine Fraktion über einen Luftherd geführt wird und eine Fraktion über einen Schrägbandabscheider zwecks Abscheidung nach unten rollender Mineralteile der Brennfraktion zugeführt wird. Die über den Luftherd geführte Fraktion wird in zwei Fraktionen getrennt, wovon eine Fraktion der Brennfraktion zugeführt wird und die zweite Fraktion als verschmutztes Schwergut einer selektiv wirkenden Zerkleinerung zugeführt wird. Diese Fraktion wird nach der selektiven Zerkleinerung mittels Sieb in zwei Fraktionen getrennt, wovon die Überkornfraktion alle elastischen Teile enthält und die Siebdurchgangsfraktion alle Mineralteile mit noch sorptiv anhaftenden organischen Stoffen, die danach über eine Waschanlage abgespült und nach Trocknung der Brennfraktion zugeführt werden. Durch die Erfindung wird ein Verfahren und eine Vorrichtung zur Inertstoffabscheidung aus mechanisch-biologisch aufbereitetem Restabfall nach selektiver Zerkleinerung geschaffen. In dem wasserbedüsten Schneckenförderer wird die noch infolge Anhaftung organische Oberflächenbelastung am zerkleinerten Schwergut in einer Wäsche abgespült.

## Patentansprüche

1. Verfahren zur Behandlung von Abfall oder Restabfall (1),
bei dem der Abfall bzw. Restabfall (1) in einem geschlossenen Behälter (4) unter Zwangsbelüftung biologisch oder mechanisch-biologisch behandelt, nämlich stabilisiert wird,
bei dem der derart behandelte Abfall bzw. Restabfall (1) in eine Fraktion (16) mit spezifisch leichtem Material und in eine Fraktion (18) mit spezifisch schwerem Material sortiert (8) wird,
bei dem die Fraktion (18) mit spezifisch schwerem Material selektiv zerkleinert (19) wird, wobei die spröden Bestandteile dieser Fraktion zerkleinert werden, und wobei Fehleinträge wie Holz oder Kunststoff nicht zerkleinert werden,
und bei dem die selektiv zerkleinerte Fraktion in zwei Fraktionen (22, 23) getrennt, vorzugsweise gesiebt (21), wird.

2. Verfahren nach Anspruch 1, **dadurch gekennzeichnet, daß** der Siebdurchgang (23) gewaschen (24) wird.

3. Verfahren nach Anspruch 2, **dadurch gekennzeichnet, daß** das abgewaschene Material getrocknet wird.

4. Verfahren nach einem der vorhergehenden Ansprüche, **dadurch gekennzeichnet, daß** die selektive Zerkleinerung (19) mittels einer Prall- und/oder Schlag- und/oder Walzenzerkleinerungsvorrichtung und/oder einem Prallbrecher und/oder einem Walzenbrecher durchgeführt wird.

5. Verfahren nach einem der vorhergehenden Ansprüche, **dadurch gekennzeichnet, daß** die Sortierung bzw. Dichtesortierung durch einen Luftherd (8) erfolgt.

6. Verfahren nach einem der vorhergehenden Ansprüche, **dadurch gekennzeichnet, daß** der Abfall bzw. Restabfall (1) vor der Sortierung bzw. Dichtesortierung (8) vorklassiert, vorzugsweise gesiebt (7) wird.

7. Verfahren nach Anspruch 6, **dadurch gekennzeichnet, daß** aus dem Siebüberlauf nach unten rollende Mineralteile abgeschieden werden, vorzugsweise durch einen Schrägbandabscheider (9).

8. Vorrichtung zur Behandlung von Abfall oder Restabfall (1) mit einem geschlossenen Behälter (4), der eine Einrichtung zur Zwangsbelüftung aufweist, zum biologischen oder mechanisch-biologischen Behandeln, nämlich Stabilisieren des Abfalls bzw. Restabfalls, einem Luftherd (8) zum Sortieren des stabilisierten Abfalls bzw. Restabfalls (1) in eine Fraktion (16) mit spezifisch leichtem Material und in eine Fraktion (18) mit spezifisch schwerem Material, mit einer Einrichtung (19) zum selektiven Zerkleinern der Fraktion (18) mit spezifisch schwerem Material derart, daß die spröden Bestandteile dieser Fraktion zerkleinert werden und Fehleinträge wie Holz oder Kunststoff nicht zerkleinert werden, sowie mit einer Trennungseinrichtung, vorzugsweise einem Sieb (21), zum Trennen der selektiv zerkleinerten Fraktion in zwei Fraktionen (22, 23).

9. Vorrichtung nach Anspruch 8, **dadurch gekennzeichnet, daß** die Einrichtung (19) zum selektiven Zerkleinern der Fraktion (18) mit spezifisch schwerem Material eine Prall- und/oder Schlag- und/oder Walzenzerkieinerungsvorrichtung und/oder ein Prallbrecher und/oder ein Walzenbrecher ist.

10. Vorrichtung nach Anspruch 8 oder 9, **gekennzeichnet durch** eine Waschanlage (24) zum Waschen des Siebdurchgangs (23).

11. Vorrichtung nach Anspruch 10, **gekennzeichnet durch** einen Trockner zum Trocknen des abgewaschenen Materials.

12. Vorrichtung nach einem der Ansprüche 8 bis 11, **gekennzeichnet durch** ein Sieb (7) zum Vorklassieren des Abfalls bzw. Restabfalls.

13. Vorrichtung nach Anspruch 12, **gekennzeichnet durch** einen Schrägbandabscheider (9) zum Abscheiden von nach unten rollenden Mineralteilen aus dem Siebüberlauf.

## Claims

1. Process for treating waste or residual waste (1)
in which the waste or residual waste (1) is treated biologically or mechanically and biologically, that is to say is stabilized, in a closed vessel (4) with forced aeration,
in which the waste or residual waste (1) thus treated is classified (8) into a fraction (16) having low specific gravity material and a fraction (18) having high specific gravity material,
in which the fraction (18) having high specific gravity material is selectively comminuted (19), the brittle constituents of this fraction being comminuted and wrongly included materials such as wood or plastic not being comminuted,
and in which the selectively comminuted fraction is separated, preferably screened (21), into two fractions (22, 23).

2. Process according to Claim 1, **characterized in that** the screening undersize material (23) is washed (24).

3. Process according to Claim 2, **characterized in that** the material washed off is dried.

4. Process according to one of the preceding claims, **characterized in that** the selective comminution (19) is carried out using an impact and/or hammer and/or roller comminution apparatus and/or an impact crusher and/or a roller crusher.

5. Process according to one of the preceding claims, **characterized in that** the classification or density classification is carried out by a pneumatic table (8).

6. Process according to one of the preceding claims, **characterized in that** the waste or residual waste (1) is preclassified, preferably screened (7) before the classification or density classification (8).

7. Process according to Claim 6, **characterized in that** downwards-rolling mineral pieces are separated off from the screening oversize material, preferably by an inclined belt separator (9).

8. Apparatus for treating waste or residual waste (1), having a closed vessel (4) which possesses a device for forced aeration, for the biological or mechanical and biological treatment, that is to say stabilization, of the waste or residual waste, a pneumatic table (8) for classifying the stabilized waste or residual waste (1) into a fraction (16) having low specific gravity material and a fraction (18) having high specific gravity material, having a device (19) for the selective comminution of the fraction (18) having high specific gravity material in such a manner that the brittle constituents of this fraction are comminuted and wrongly included material such as wood or plastic is not comminuted, and having a separation device, preferably a screen (21) for separating the selectively comminuted fraction into two fractions (22, 23).

9. Apparatus according to Claim 8, **characterized in that** the device (19) for selectively comminuting the fraction (18) having high specific gravity material is an impact and/or hammer and/or roller comminution apparatus and/or an impact crusher and/or a roller crusher.

10. Apparatus according to Claim 8 or 9, **characterized by** a washing plant (24) for washing the screening undersize material (23).

11. Apparatus according to Claim 10, **characterized by** a dryer for drying the material washed off.

12. Apparatus according to one of Claims 8 to 11, **characterized by** a screen (7) for preclassifying the waste or residual waste.

13. Apparatus according to Claim 12, **characterized by** an inclined belt separator (9) for separating off downwards-rolling mineral pieces from the screening oversize material.

## Revendications

1. Procédé de traitement des déchets ou des résidus de déchets (1) pour lequel les déchets ou les résidus de déchets (1) sont traités biologiquement ou biologiquement et mécaniquement sous ventilation forcée dans une enceinte (4) fermée, c'est à dire stabilisés, pour lequel les déchets ou les résidus de déchets (1) sont triés (8) en une fraction (16) de matière spécifiquement légère et une fraction (18) de matière spécifiquement lourde, lors de quoi la fraction (18) de matière spécifiquement lourde est fragmentée (19) sélectivement, les composants fragiles de cette fraction étant fragmentés et les composants erratiques comme le bois ou le plastique n'étant pas fragmentés, et pour lequel la fraction fragmentée sélectivement est séparée en deux fractions (22, 23), de préférence par tamisage (21).

2. Procédé selon la revendication 1, **caractérisé en ce que** la fraction ayant traversé le tamis (23) est lavée (24).

3. Procédé selon la revendication 2, **caractérisé en ce que** le matériau éliminé par lavage est séché.

4. Procédé selon une des revendications ci-avant, **caractérisé en ce que** la fragmentation sélective (19) est effectuée au moyen d'un dispositif de fragmentation à percussions et / ou à chocs et / ou à cylindres et / ou au moyen d'un broyeur / concasseur à percussions et / ou à cylindres

5. Procédé selon une des revendications ci-avant, **caractérisé en ce que** le triage, respectivement le triage d'après les densités, est effectué par une table d'épuration pneumatique (8).

6. Procédé selon une des revendications ci-avant, **caractérisé en ce que** les déchets, respectivement les résidus de déchets (1) sont pré-classés avant le triage, respectivement le triage d'après les densités (8), de préférence par tamisage (7).

7. Procédé selon la revendication 6, **caractérisé en ce que** les composants minéraux qui roulent vers le bas sont séparés du refus de tamisage, de préférence par une trieuse à bande oblique (9).

8. Installation de traitement de déchets et de résidus de déchets (1) avec une enceinte fermée (4) qui présente un dispositif de ventilation forcée pour le traitement biologique ou biologique et mécanique, c'est à dire pour la stabilisation des déchets ou résidus de déchets, une table d'épuration pneumatique (8) pour trier les déchets ou résidus de déchets stabilisés (1) en une fraction (16) avec la matière spécifiquement légère et une fraction (18) avec la matière spécifiquement lourde, avec un dispositif (19) de fragmentation sélective de la fraction (18) avec la matière spécifiquement lourde de telle sorte que les composants fragiles de cette fraction soient fragmentés et les composants erratiques comme le bois ou le plastique ne soient pas fragmentés, de même qu'avec un dispositif de séparation, de préférence un tamis (21), pour séparer la fraction fragmentée sélectivement en deux fractions (22, 23).

9. Installation selon la revendication 8, **caractérisée en ce que** le dispositif (19) de fragmentation sélective de la fraction (18) de matière spécifiquement lourde est un dispositif de fragmentation à percussions et / ou à chocs et / ou à cylindres, et / ou un broyeur / concasseur à percussions et / ou à cylindres.

10. Installation selon une des revendications 8 ou 9, **caractérisée par** une installation de lavage (24) pour le lavage de la fraction ayant traversé le tamis (23).

11. Installation selon la revendication 10, **caractérisée par** un séchoir pour le séchage du matériau détaché par lavage.

12. Installation selon une des revendications 8 à 11, **caractérisée par** un tamis (7) pour pré-classer les déchets ou les résidus de déchets (1).

13. Installation selon la revendication 12, **caractérisée par** une trieuse à bande oblique (9) pour séparer du refus de tamisage les fragments minéraux qui roulent vers le bas.
